# EUROPEAN PATENT APPLICATION

(11) **EP 4 610 186 A1**
(43) Date of publication of application: **03.09.2025**
(21) Application number: 25160884.0
(22) Date of filing: 28.02.2025
(51) Int. Cl.: B65D 5/76, B65D 25/52, B65D 47/26, B65D 47/28, B65D 5/74, B65D 25/48

(54) **REUSABLE CAP**

(30) Priority: 28.02.2024 IT 202400004378
(71) Applicant: TECS S.r.l., 20122 Milano (IT)
(72) Inventor: ZITO, Diego, 20011 Corbetta (IT)
(74) Representative: Lunati & Mazzoni S.r.L.

(57) **Abstract**

A reusable cap (1) is provided comprising at least a first tubular body (2) defining a central axis (2a) and including a base (20) developing, at a first end (2a) of the first body (2), around the central axis (2a) on a plane perpendicular to the central axis (2a) and adapted to be placed in contact with a casing around an access; and one or more tabs (4) developing, at least when the cap (1) is in use, parallel to the base (20) at least at two distal zones of the first body (2) reciprocally opposite with respect to the central axis (2a) and of which at least one is movable at least radially with respect to the central axis (2a) so as to be able to define at least one rest configuration in which the at least one movable tab (4) is closest to the central axis (2a) and lies internally to the first body (2) or is inscribed within a projection of the first body (2) along the central axis (2a), and a locking configuration in which the at least one movable tab (4) is pushed away from the central axis (2a) and further away from the central axis (2a) to overlap the base (20) such that, when the cap (1) is in use, the one or more tabs (4) and the base (20) can trap part of the casing around the access.

## Description

The object of the present invention is a reusable cap of the type specified in the preamble to the first claim.

In particular, the object of the present invention is a cap that can be applied to any casing provided with an access hole and which can be removed from the casing, for example once the product contained therein has been used up, and reused for another container.

As is known, food or cosmetic containers are equipped with a fixed cap adapted to protect the contents from the external environment. Normally the cap consists of a first portion provided with access to the interior of the casing of the container, integral to the casing and generally provided with a thread or other retaining device, and a second portion removably constrained to the thread or retaining device in such a manner that it can be removed and the access freed.

The disclosed prior art has some significant drawbacks.

In particular, the conventional conformation of the caps of the prior art does not make it possible to use the same cap for other containers.

In addition, these caps do not guarantee other functions, other than basic functions such as the affixing of a security seal or the mechanism for retaining the second portion adhered to the first portion, which has recently been implemented.

To try to overcome these drawbacks, other caps have been made, for example described in patent documents DE-U-29619195, JP-A-2006027729 and KR-B-101326765.

The aforementioned documents substantially describe removable caps including a first wedge portion configured to allow insertion onto a box or brick upon penetration.

Although such caps are certainly reusable, they do not make it possible to obtain an optimal connection resistant to rather sustained pulling of the cap.

In addition, perforation of the container may lead to unwanted breakage of the container which may compromise the preservation of the product inside.

Another example of a removable cap, in this case used as a filter, is described in the patent document US-B-7066337.

This document describes a cap provided with a first portion adapted to be inserted into a hole of the casing and including an enlarged base that obstructs the exit of the first portion from the hole. Then, the cap further includes a second wedge portion fittable on the outside of the second portion for locking the first portion on the casing. In conclusion, the cap comprises a third removable portion that frees an access present on the first and second portions adapted to access the casing.

However, the aforementioned cap also entails important drawbacks.

In fact, the cap described in US-B-7066337 cannot be reused if the base of the first portion is stiff. In fact, insertion of the first portion into a hole of a new casing would result in breakage of the casing itself.

On the other hand, if equipped with a deformable base, the cap could never enable sufficient stability and would be easily removable from the container with the consequence, also in this case, of not ensuring that the product contained in the casing was stored correctly.

In this situation, the technical task underlying the present invention is to devise a reusable cap that can substantially obviate at least part of the above-mentioned drawbacks.

Within said technical task it is an important aim of the invention to obtain a reusable cap which is easily adaptable to any casing.

Another important object of the invention is to make a reusable cap that is stably couplable to the casing of the container ensuring, in particular, an effective constraint of at least part of the cap to the casing to prevent unwanted opening of the casing itself.

In addition, a further object of the invention is to obtain a reusable cap that is couplable to the container avoiding any damage or breakage of the casing.

The technical task and the specified objects are achieved by a reusable cap as claimed in the attached Claim 1.

Preferred technical solutions are highlighted in dependent claims.

The features and advantages of the invention are clarified below by the detailed description of preferred embodiments of the invention, with reference to the attached drawings, in which:
Fig. 1 shows a perspective view of a reusable cap according to the invention in a first embodiment wherein there are guides and two sliders each equipped with a tab;
Fig. 2a illustrates a side view of the cap of Fig. 1 wherein the tabs are in a rest configuration and the casing is drawn in hatching;
Fig. 2b is a side view of the cap of Figs. 1-2a wherein the tabs are in locking configuration and the casing is drawn in hatching;
Fig. 3 represents a perspective bottom view of a reusable cap according to the invention in a second embodiment wherein there is a second body equipped with tabs;
Fig. 4a shows a perspective view of the second body provided with tabs of a reusable cap according to the invention in a second embodiment;
Fig. 4b illustrates a sectional side view of the second body of Fig. 4a wherein the flaps are in a rest configuration;
Fig. 4c is a sectional side view of the second body of Figs. 4a-4b wherein the flaps are in a locking configuration;
Fig. 5 represents a top perspective view of the second body equipped with tabs of a reusable cap according to the invention in a second embodiment wherein it is highlighted that the flaps remain inside the projection of the second body along the central axis;
Fig. 6 shows a first dispenser of a reusable cap according to the invention in a first embodiment wherein the axis of reciprocal movement between the fourth and fifth body is aligned with the central axis;

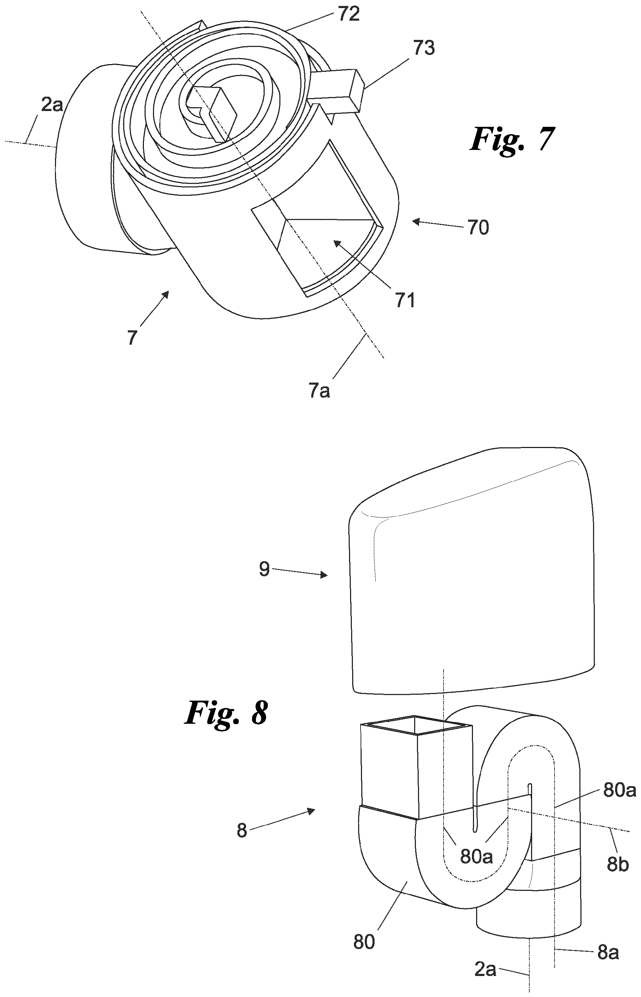

Fig. 7 illustrates a first dispenser of a reusable cap according to the invention in a second embodiment wherein the axis of reciprocal movement between the fourth and fifth body is perpendicular to the central axis; and
Fig. 8 is a second dispenser of a reusable cap according to the invention.

In this document, when measurements, values, shapes, and geometric references (such as perpendicularity and parallelism) are associated with words like "approximately" or other similar terms, such as "almost" or "substantially", they are to be understood as excluding measurement errors or inaccuracies due to production and/or manufacturing errors and, above all, as having less than a slight deviation from the associated value, measurement, shape, or geometric reference. For example, if associated with a value, such terms preferably indicate a deviation by no more than 10% of the value itself.

Moreover, when used, terms such as "first", "second", "upper", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computing", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

Unless otherwise stated, the measurements and data reported in this text shall be considered as provided in International Standard Atmosphere ICAO (ISO 2533:1975).

With reference to the Figures, the one reusable cap according to the invention is globally referred to as number 1.

The cap 1 is preferably reusable. Therefore, the cap 1 can be placed on top of a casing, provided with access, and then subsequently removed therefrom in order to be reused.

The casing may be the containing portion of a foodstuff container or other.

The cap 1 comprises, in sum, at least a first body 2.

The first body 2 is substantially a tubular element. Hence, the second body 2 preferably defines a central axis 2a. The central axis 2a is substantially the axis along which the first body 2 develops and, in detail, around which the first body 2 develops and therefore preferably barycentric. If the first body 2 is cylindrical, then the central axis 2a may be the revolution axis of said first cylindrical body 2.

The first body 2, being tubular, defines a first through hole developing along said central axis 2a. Said first through-hole is configured to place the inside of the casing in a use passage connection when the cap 1 is placed on top of a casing and therefore constrained to it.

In addition, the first body 2 comprises at least one base 20.

The base 20 develops around the central axis 2a in a plane transversal and to be precise perpendicular to the central axis 2a. Furthermore, in detail, the base 20 is located at a first end 2b of the first body 2.

The base 20 develops at least in part around said first hole so as to obstruct at most a portion of the first hole along said axis 2a. Preferably it develops integrally around the first hole which is therefore totally free.

The first end 2b is one of the free ends of the body 2 and, in detail, the end adapted to interact with a casing. In fact, the base 20 is adapted to be placed in contact with a casing around an access. Said first end 2b can be inserted in said casing when the base 20 is in contact with the casing.

The cap 1, moreover, preferably comprises one or more tabs 4. The one or more tabs 4 develop, at least when the cap 1 is in use, parallel to the base 20.

The one or more tabs 4 may be proximal to the first end 2b.

Furthermore, the cap 1 could comprise at least two tabs 4 developing at least at two distal zones of the first body 2 reciprocally opposed with respect to the central axis 2a. Alternatively, the cap 1 could comprise a single flap 4 developing from one distal zone to the other distal zone.

In any case, preferably, at least one of the one or more tabs 4 is movable with respect to the body 2 at least radially, i.e. perpendicularly, to the central axis 2a. Advantageously, the movability of at least one flap 4 makes it possible to define at least a rest configuration and a locking configuration.

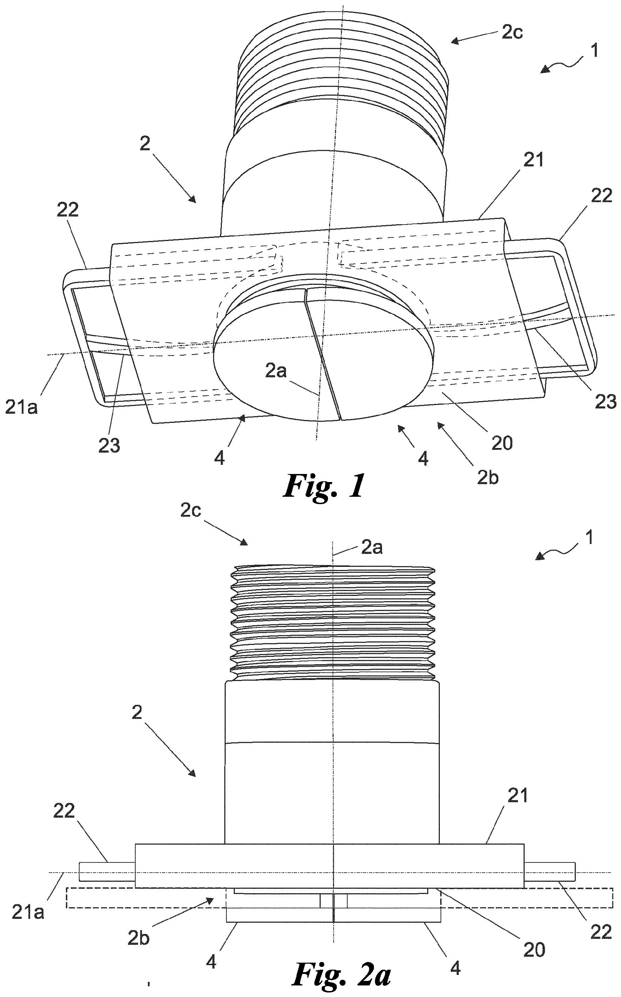

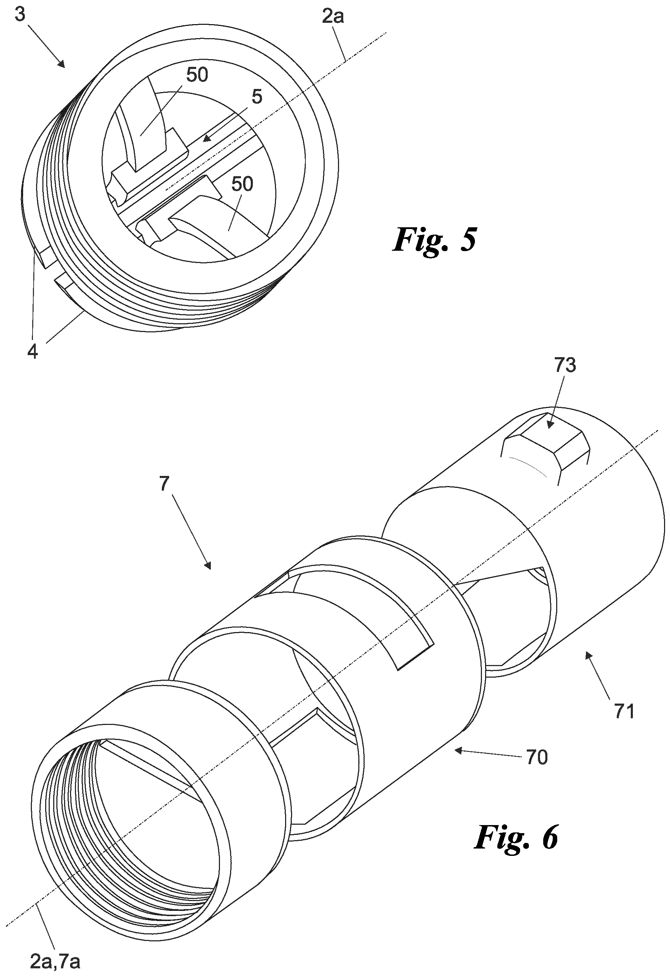

In the rest configuration, the one or more movable tabs 4 are closer to the central axis 2a. Thus, they are approximately inscribed within a projection of the first body 2 along the central axis 2a and preferably lie internally to the first body 2 as for example highlighted in Figs. 1, 2a, 4b and 5.

This allows one or more tabs 4 to be easily inserted into the access.

In the locking configuration, on the other hand, the one or more movable tabs 4 are pushed away from the central axis 2a. Hence, they are further away from the central axis 2a to overlap the base 20 appropriately along the central axis 2a. In this way, the one or more movable tabs 4 and the base 20 trap and in particular tighten part of the casing around the access when the cap 1 is in use.

The cap 1 can, therefore, be structured in different ways.

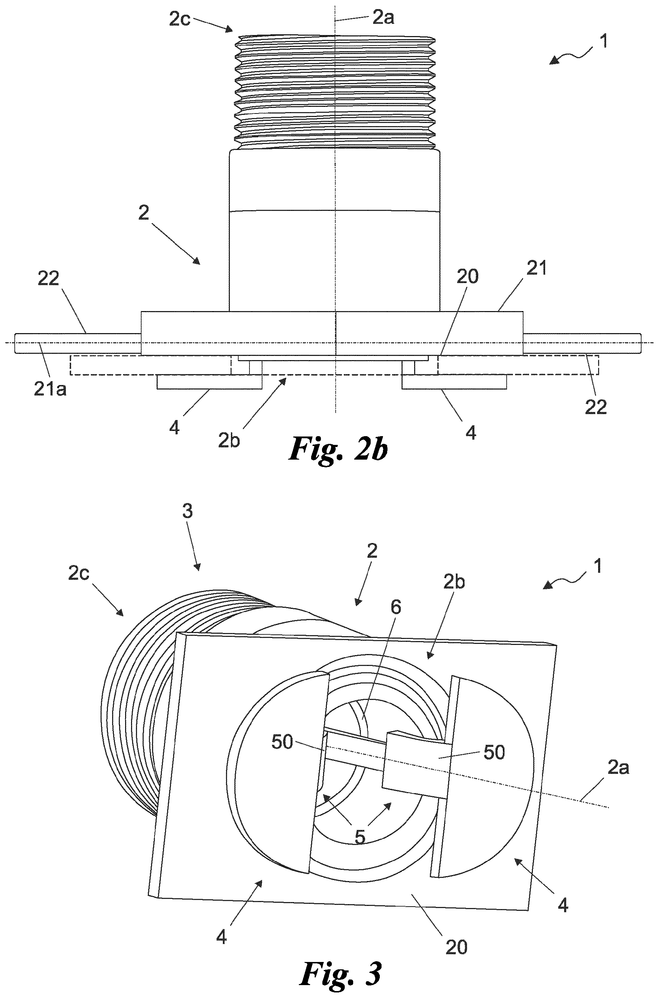

For example, in a first embodiment shown in Figs. 1-2b, the first body 2 may comprise a guide 21.

If present, the guide 21 may comprise the base 20. The guide 21 preferably defines a sort of slot or conduit within which other components can move in a controlled manner.

Then, the guide 21 develops along and thus defines a guide direction 21a.

The guide direction 21a is transversal and preferably perpendicular, i.e. radial, to the central axis 2a. Then, the guide 21 allows the movement of components along the guide direction 21a.

Therefore, the first body 2 also comprises at least one slider 22, possibly also two sliders 22. Preferably, the first body 2 comprises a slider 22 for each movable tab 4. In particular, each of the tabs 4 is integral with a respective slider 22 in such a way as to be able to achieve the locking and rest configurations by moving the sliders 22 with respect to the guide 21.

Preferably the guide 21 and optionally the at least one slider 21 are obtained at the face of the base 20 opposite to that configured to come into contact with the casing. Further, the at least one slider 22 is positioned inside the guide 21 such that it can be moved with respect to the guide 21 along the guide direction 21a.

The slider 22 is, in addition, preferably accessible from outside the guide 21. In this way, it can be easily manipulated by a user.

Thus, preferably, the tabs 4 are preferably at least two in number. In particular, one of the tabs 4 is integral with the guide 21 (it is therefore static with respect to the body 2), while the movable tab 4 is integral with the slider 22 such that the locking and rest configurations can be achieved by moving the slider 22 with respect to the guide 21.

In the embodiment wherein there are two sliders 22, they are preferably arranged specularly with respect to the central axis 2a.

Further, each slider 21 is positioned within the guide 21 such that it can be moved with respect to the guide 20 along the guide direction 21a.

The sliders 22 are, in addition, preferably accessible from outside the guide 21. In this way, they can be easily manipulated by a user.

In this embodiment, the first body 2 may further comprise first opposition means 23. If present, the first opposition means 23 are elastic. Hence, the first opposition means 23 are interacting with one or more sliders 22. In particular, the first opposition means 23 are configured to oppose the passage from the locking configuration to the rest configuration of the tabs 4. Therefore, the first opposition means 23 could reciprocally connect guide 21 and sliders 22.

In a second embodiment, the cap 1 could instead further comprise a second body 3.

If present, the second body 3 is preferably also tubular like the first body 2. Then, the second body 3 is preferably centred with respect to the central axis 2a.

It should be noted that if the second body 3 is absent, the one or more flaps 4 can be constrained to the first body 2 suitably directly through, for example, the one or more sliders 22 and then the guide 21.

Alternatively, if the second body 3 is present, the one or more flaps 4 can be constrained to the second body 3 suitably directly, for example, via the constraint means 5 introduced below. In this case when the body 3 is associated with the body 2 the one or more flaps 4 are constrained to the first body 2 indirectly via the second body 3.

Further, the second body 3 is adapted to be stably inserted within the first body 2 from a second end 2c of the first body 2. The second end 2c is preferably opposite to the first end 2b. Therefore, the second end 2c is opposite with respect to the position of the casing.

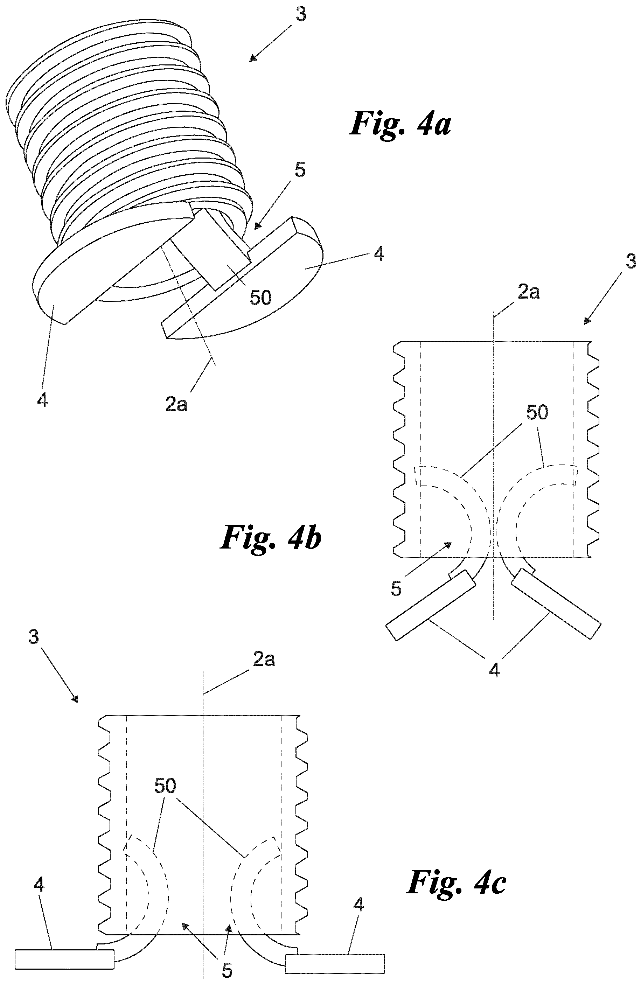

Therefore, the second body 3 defines, with respect to the first body 2, at least an extraction position and a use position, shown in particular in Figs. 4b and 4c.

In the extraction position, the major part of said second body 3 is external to said first body 2.

In the use position, preferably the major part of said second body 3 is inserted in said first body 2.

In this embodiment, the cap 1 also comprises constraint means 5.

The constraint means 5 are elastic. In addition, the constraint means 5 are configured to constrain the one or more tabs 4 approximately inscribed within a projection of the first body 2 (or of the second body 3) along the central axis 2a and, preferably, internally to the first body 2 or to the second body 3.

Further, the constraint means 5 are configured to elastically deform at least when the second body 3 is stably inserted into the first body 2. Due to the deformation and configuration, the constraint means 5 make it possible to determine at least two solutions. In detail, preferably, when the second body 3 is in the extraction position said one or more movable tabs 4 are in rest configuration.

Conversely, when said second body 3 is in said use position and said constraint means 5 deform, said at least one movable tab 4 is in said locking configuration. Thus, the constraint means 5 could be substantially configured to oppose the passage of the tabs from the locking to the rest position.

In detail, the constraint means 5 may comprise at least two arms 50.

If present, the arms 50 are preferably placed at the distal zones.

In detail, the arms 50 can develop from an internal surface of the body 2 towards the first end 2b or from a surface of the second body 3 towards the outside of the second body 3 itself at an end thereof.

In even more detail, preferably, one or more arms form an arc in such a way as to allow the tabs 4 to roto-translate defining a non-rectilinear trajectory, for example curvilinear, during the passage from the rest configuration to the locking configuration.

Second body 3 and first body 2 can, therefore, be coupled by means of a thread. If present, the thread preferably develops around the central axis 2a. In this way, the passage from the extraction position to the use position is achieved by means of reciprocal rotation between the bodies 2, 3.

To achieve the deformation of the constraint means 5 and move the flaps from the rest position to the locking position, it may be sufficient to reciprocally move the bodies 2, 3 along the central axis 2a.

Or, alternatively, the cap 1 may also further comprise a third body 6.

The third body 6 is preferably present when the tabs 4 are constrained to the second body 3. Hence, the third body 6 can also be tubular and therefore define a second through hole developing along said central axis 2a. In addition, it may be centred with respect to the central axis 2a.

Then, the third body 6 is adapted to be stably inserted within the second body 3 starting from the second end 2c to push the tabs 4 to pass from the rest configuration to the locking configuration.

The cap 1 may also comprise further elements.

For example, the cap 1 may comprise a first dispenser 7.

The cap 1 could also, for the sake of completeness, include the first dispenser 7 in the absence of one or more and in detail the totality of tabs 4, second body 3 and constraint means 5. If one or more of the latter are present, preferably the first dispenser 7 is removably constrained to the first body 2 in such a way as to allow its coupling after the cap 1 is constrained to the casing.

Essentially, the first dispenser 7 could be integrated into the second body 2 or could be integral with it, possibly constrained to it.

In general, the first dispenser 7 is at least operatively connected to the first body 2. Then, the first dispenser 7 defines a predetermined volume.

Further, the first dispenser 7 is configured to define at least a loading condition and an unloading condition.

In the loading condition, the first dispenser 7 is in fluid passage connection exclusively with the first body 2. In this way, the first dispenser 7 is capable of receiving a substance, whether liquid or solid, within the predetermined volume. Then, in the unloading condition, the first dispenser 7 is in fluid passage connection exclusively with an environment external to the cap 1.

Then, the first dispenser 7, in this unloading condition, delivers the predetermined volume of substance.

The first dispenser 7, in detail, comprises a fourth body 70 and a fifth body 71. Both bodies 70, 71 are preferably hollow.

The fourth body 70 is preferably in fluid passage connection with the first body 2 and with the external environment. For example, in this regard, the fourth body 70 can include at least one access integrated in the second body 2 or communicating with it and a distinct other access communicating with the external environment.

Instead, the fifth body 71 preferably defines the predetermined volume. Furthermore, the fifth body 70 is movable with respect to the fourth body 70 along or around a movement axis 7a.

The movement axis 7a can be, for example, aligned with the central axis 2a or transversal with respect thereto.

Furthermore, the movability of the fifth body 71 with respect to the fourth body 70 is such as to allow the first dispenser 7 to selectively switch from the loading condition to the unloading condition, and vice versa. The movement takes place, in detail, in response to a translational and/or rotational movement of the fifth body 71 with respect to the fourth body 70 along or around the movement axis 7a.

Hence, the first dispenser 7 could also comprise second opposition means 72.

If present, the second opposition means 72 could be operatively connected between the fourth and fifth body 70, 71. Then, the second opposition means 72 could be configured to oppose the passage of the fifth body 71 from the loading position to the unloading position.

In addition, the first dispenser 7 could also comprise a lever 73.

If present, the lever 73 is preferably integral with the fifth body 71. Therefore, the lever 73 is also preferably accessible from the outside of the fourth body 70 in such a way as to allow manual control of the movement of the fifth body 71 with respect to the fourth body 70.

Alternatively to the first dispenser 7, the cap 1 could comprise a second dispenser 8.

Similarly to the first dispenser 7, the cap 1 could also, for the most part, include the second dispenser 8 in the absence of tabs 4, second body 3 and constraint means 5. Also in this case, if one or more of the latter are present, preferably the first dispenser 7 is removably constrained to the first body 2 in such a way as to allow its coupling after the cap 1 is constrained to the casing.

Essentially, the second dispenser 8 could be integrated in the second body 2 or could be integral with it, possibly constrained to it.

In general, the second dispenser 8 is at least operatively connected to the first body 2.

Then, the second dispenser 8 preferably includes a conduit 80.

The conduit 80 is preferably in fluid passage connection with the first body 2. Furthermore, the conduit 80 preferably develops along a trajectory 8a.

The trajectory 8a is preferably serpentine. Therefore, the trajectory 8a preferably defines three reciprocally parallel sections 80a and two additional junction sections between two of said three sections 80a. Given the shape of the trajectory 8a, the conduit 80 is configured in such a way that an alternating rotation of the second dispenser 8 around an axis of rotation 8b perpendicular to the plane identified by the trajectory 8a results in the exit from the conduit 80 of a substance in an amount equal to the amount of substance which can consequently pass through the sections 80a (and optionally the additional sections) during rotation around the axis of rotation 8b.

Of course, in this as in other embodiments, the cap 1 may comprise a cap 9.

The cap 9 is, in fact, preferably integrally couplable to at least one of the bodies 2, 3 and the dispensers 7, 8. Therefore, it is configured to close the cap 1 by isolating it from the external environment.

The operation of the above described reusable cap 1 in structural terms is as follows. Substantially, the cap 1 can be placed at an access on a casing and, by bringing the one or more movable tabs 4 from the rest position to the locking position, it is possible to constrain the first body 2 on the casing, at least until the substance contained therein is used up. Once the substance is used up, it is possible to bring the one or more movable tabs 4 from the locking position to the rest position, possibly resorting to breaking the casing if necessary, in order to be able to reuse the cap on another casing or on the same casing refilled again.

In addition or alternatively, the cap 1 can allow the substance contained inside the casing 1 to be dispensed in a controlled manner, i.e. by dispensing a predetermined volume by means of movement of the dispenser. If there is a first dispenser 7, the reciprocal movement between the fourth and fifth body 70, 71 allows the controlled loading and unloading to be carried out. If there is a second dispenser 8, it is the rotation about an axis perpendicular to the plane of development of the trajectory, carried out alternately in the two opposite directions, which determines the exit of a predetermined volume of substance.

The reusable cap 1 according to the invention provides important advantages.

In fact, the reusable cap 1 is easily adaptable to any casing.

In addition, the reusable cap 1 can be stably coupled to the casing of the container, in particular ensuring an effective constraint of at least part of the cap 1 on the casing to prevent unwanted opening of the casing itself.

In addition, the reusable cap 1 can be coupled to the container avoiding any damage or breakage of the casing.

Variations may be made to the invention that fall within the scope of the inventive concept defined in the claims.

In this context, all the details can be replaced by equivalent elements and any materials, shapes and dimensions can be used.

## Claims

1. A reusable cap (1) comprising at least:
- a first tubular body (2) defining a central axis (2a), adapted to be at least partially inserted in a casing through an access of said casing and including a base (20) developing, at a first end (2b) of said first body (2), around said central axis (2a) on a plane transversal to said central axis (2a) and adapted to be placed in contact with said casing around said access;
and **characterised by** further comprising:
- one or more tabs (4) developing, at least when said cap (1) is in use, parallel to said base (20) in correspondence with at least two distal zones of said first body (2) reciprocally opposed with respect to said central axis (2a) and at least one of which is movable at least radially to said central axis (2a) so as to be able to define at least:
- a rest configuration wherein said at least one movable tab (4) is closest to said central axis (2a) and lies internally to said first body (2) or is inscribed within a projection of said first body (2) along said central axis (2a), and
- a locking configuration wherein said at least one movable tab (4) is pushed away from said central axis (2a) and is further away from said central axis (2a) to overlap said base (20) such that, when said cap (1) is in use, said one or more tabs (4) and said base (20) can trap part of said casing around said access.

2. Cap (1) according to claim 1, wherein said first body (2) comprises a guide (21) comprising said base (20) and developing along a guide direction (21a) perpendicular to said central axis (2a) and at least one slider (22) slidable in said guide (21) so as to be movable with respect to said guide (20) along said guide direction (21a) and accessible from the outside of said guide (21), and said one or more tabs (4) being at least two in number and one integral with said guide (21) and the other integral with said slider (22) such that said locking and rest configurations can be achieved by moving said sliders (22) with respect to said guide (21).

3. Cap (1) according to claim 1, wherein said first body (2) comprises a guide (21) comprising said base (20) and developing along a guide direction (21a) perpendicular to said central axis (2a) and at least two sliders (22) arranged specularly with respect to said central axis (2a) in said guide (21) so as to be movable with respect to said guide (20) along said guide direction (21a) and accessible from outside said guide (21), and said at least one movable tab (4) being at least two in number and each integral with a respective said slider (22) such that said locking and rest configurations can be achieved by moving said sliders (22) with respect to said guide (21).

4. Cap (1) according to any one of claims 2-3, wherein said first body (2) further comprises first elastic opposition means (23) interacting with said one or more said sliders (22) and configured to oppose the passage from said locking configuration to said rest configuration of said one or more tabs (4).

5. Cap (1) according to claim 1, further comprising:
- a second tubular body (3) centred with respect to said central axis (2a) and adapted to be stably inserted within said first body (2) from a second end (2c) opposite said first end (2b) of said first body (2) so as to define at least:
- an extraction position wherein the major part of said second body (3) is external to said first body (2), and
- a use position wherein the major part of said second body (3) is inserted in said first body (2);
- elastic constraint means (5) configured to constraint said one or more tabs (4) internally to said first body (2) or to said second body (3) and to deform elastically at least when said second body (3) is stably inserted in said first body (2) so that:
- when said second body (3) is in said extraction position at least one movable tab (4) is in said rest configuration, and
- when said second body (3) is in said use position and said constraint means (5) deform, said at least one movable tab (4) is in brought into said locked configuration.

6. Cap (1) according to the preceding claim, wherein said at least one movable tab (4) being at least two in number; wherein said constraint means (5) include for each said movable tab (4) an arm (50); said arms (50) being placed in correspondence with said distal zones and developing from an internal surface of said first body (2) towards said first end (2b), or from a surface of said second body (3) towards the outside of said second body (3) at one of its ends, forming an arc so as to allow said movable tabs (4) to translate defining a non-rectilinear trajectory during the passage from said rest configuration to said locking configuration.

7. Cap (1) according to any one of claims 5-6, wherein said second body (3) and said first body (2) are coupled by means of a thread developing around said central axis (2a) so that the passage from said extraction position to said use position is realised by means of reciprocal rotation between said bodies (2, 3).

8. Cap (1) according to any one of claims 5-7, wherein said tabs (4) are integral with said second body (3) and said cap (1) further comprises a third tubular body (6) centred with respect to said central axis (2a) and adapted to be stably inserted within said second body (3) starting from said second end (2c) to push said movable tabs (4) to move from said rest configuration to said locking configuration.

9. Cap (1) according to any of the previous claims, comprising a first dispenser (7) defining a predetermined volume, operatively connected to said first body (2) and configured to define, when said cap (1) is in use, at least:
- a loading condition wherein said first dispenser (7) is in fluid passage connection exclusively with said first body (2) to receive a substance within said predetermined volume, and
- an unloading condition wherein said first dispenser (7) is in fluid passage connection exclusively with an environment external to said cap (1) for dispensing said predetermined volume of said substance.

10. Cap (1) according to the preceding claim, wherein said first dispenser (7) comprises at least a fourth hollow body (70) in fluid passage connection with said first body (2) and with said environment and a fifth hollow body (71) housed in said fourth body (70) defining said predetermined volume and movable with respect to said fourth body (70) along or around a movement axis (7a) to selectively switch from said loading condition to said unloading condition and vice versa, in response to a translational or rotational movement of said fifth body (71) with respect to said fourth body (70) along or about said movement axis (7a).

11. Cap (1) according to the preceding claim, wherein said first dispenser (7) comprises second opposition means (72) operatively connected between said fourth and fifth bodies (70, 71) and configured to oppose the passage of said fifth body (71) from said loading condition to said unloading condition.

12. Cap (1) according to any one of claims 10-11, wherein said first dispenser (7) comprises a lever (73) integral with said fifth body (71) and accessible from the outside of said fourth body (70) so as to allow manual control of the movement of said fifth body (71) with respect to said fourth body (70).

13. Cap (1) according to any one of claims 1-8, comprising a second dispenser (8) including a conduit (80) in fluid passage connection with said first body (2) and developing along a serpentine trajectory (8a) defining three reciprocally parallel sections (80a), and configured in such a way that an alternating rotation of said second dispenser (8) around an axis of rotation (8b) perpendicular to the plane identified by said trajectory (8a) results in the exit from said conduit (80) of a substance in an amount equal to the amount of substance which can consequently pass through said sections (80a) during said rotation around said axis of rotation (8b).

14. Cap (1) according to any of the previous claims, comprising a cap (9) integrally coupled to at least one of said bodies (2, 3) and said dispensers (7, 8) and configured to close said cap (1) by isolating it from said external environment.
